# EUROPEAN PATENT APPLICATION

(11) **EP 4 503 817 A1**
(43) Date of publication of application: **05.02.2025**
(21) Application number: 22935549.0
(22) Date of filing: 31.03.2022
(51) Int. Cl.: H04W 72/1273, H04W 72/0446, H04W 72/20

(54) **TERMINAL, BASE STATION, AND COMMUNICATION METHOD**

(71) Applicant: NTT DOCOMO, INC., Tokyo 100-6150 (JP)
(72) Inventor: OKANO, Mayuko, Tokyo 100-6150 (JP); HARADA, Hiroki, Tokyo 100-6150 (JP); OKAMURA, Masaya, Tokyo 100-6150 (JP)
(74) Representative: Hoffmann Eitle
(86) International application number: PCT/JP2022/016948
(87) International publication number: WO 2023/188412

(57) **Abstract**

A terminal includes: a reception unit configured to receive control information for performing scheduling for a plurality of cells by a downlink channel in a specific cell; and a control unit configured to assume not performing communication by the scheduling in at least one cell of the plurality of cells during a period from an end of reception of the downlink channel until elapse of a communication preparation time.

## Description

### Technical Field

The present invention relates to a terminal, a base station, and a communication method in a radio communication system.

### Background Art

In New Radio (NR) (also referred to as "5G") which is a successor system of long term evolution (LTE), techniques for satisfying requirements such as a large-capacity system, a high-speed data transmission rate, low delay, simultaneous connection of a large number of terminals, low cost, and power saving have been studied.

Furthermore, 6G has been studied as a next-generation radio communication system of 5G, and realization of radio qualities exceeding 5G is expected. For example, in 6G, studies are being conducted to realize further increases in capacities, use of new frequencies, further reductions in delays, further increases in reliability, further reductions in power consumption, and expansion of coverage in new regions (high-altitude, sea, and space) by non-terrestrial networks.

Also, in 3GPP, a method of scheduling PDSCH and so on in multiple carriers (multiple cells) by a single DCI (Single Downlink Control Information) is under study. Further, in Non-Patent Document 1, in cross-carrier scheduling, a PDSCH reception preparation time is defined, which is a period during which scheduling is not performed after PDCCH reception.

### Prior Art Document

### Non-Patent Document

Non-Patent Document 1: 3GPP TS 38.214 V17.0.0 (2021-12)

### SUMMARY OF THE INVENTION

### Problems to be Solved by the Invention

However, in the related art, any PDSCH reception preparation time in a case of scheduling a PDSCH for a plurality of cells by a single DCI is not defined. In addition, in the related art, a PDSCH reception preparation time in which a relationship of subcarrier spacing (SCS) between a PDCCH and a PDSCH is considered is not defined.

Therefore, in the related art, when scheduling a PDSCH for a plurality of cells, a terminal and a base station may not be able to operate appropriately. Note that such a problem may occur not only when the target of scheduling is the PDSCH.

The present invention has been made in view of the above, and it is an object of the present invention to provide a technique that enables a terminal and a base station to operate appropriately when performing scheduling for a plurality of cells.

### Means for Solving the Problems

According to the disclosed technique, there is provided a terminal including: a reception unit configured to receive control information for performing scheduling for a plurality of cells by a downlink channel in a specific cell; and
a control unit configured to assume not performing communication by the scheduling in at least one cell of the plurality of cells during a period from an end of reception of the downlink channel until elapse of a communication preparation time.

### Effects of the Invention

According to the disclosed technology, a technology is provided that enables a terminal and a base station to operate appropriately when performing scheduling for a plurality of cells.

### Brief Description of the Drawings

### Brief Description of the Drawings

[Fig. 1] FIG. 1 is a diagram for explaining a radio communication system according to an embodiment of the present invention;
[Fig. 2] FIG. 2 is a diagram for explaining a radio communication system according to an embodiment of the present invention;
[Fig. 3] FIG. 3 is a diagram showing an example of a scheduling operation;
[Fig. 4] FIG. 4 is a diagram showing a PDSCH reception preparation time in cross-carrier scheduling;
[Fig. 5] FIG. 5 is a diagram illustrating an operation example in which a PDSCH reception preparation time is used;
[Fig. 6] FIG. 6 is a diagram illustrating an operation example in which a PDSCH reception preparation time is used;
[Fig. 7] FIG. 7 is a diagram for explaining a basic operation example common to the first to third embodiments;
[Fig. 8] FIG. 8 is a diagram showing an example of a value of a PDSCH reception preparation time for a single DCI multi-carrier scheduling;
[Fig. 9] FIG. 9 is a diagram showing an example of a case where a PDSCH reception preparation time is applied to self-carrier scheduling;
[Fig. 10] FIG. 10 is a diagram showing an example of a case where a PDSCH reception preparation time is not applied to self-carrier scheduling;
[Fig. 11] FIG. 11 is a diagram showing an example of a value of a PDSCH reception preparation time;
[Fig. 12] FIG. 12 is a diagram illustrating an example of a case where a value associated with 60kHz, which is the largest SCS among SCSs of two scheduled cells (PDSCH cells), is applied;
[Fig. 13] FIG. 13 is a diagram illustrating an example of a case where a value associated with 15kHz, which is SCS having the largest absolute difference from SCS of a scheduling cell (PDCCH cell), among SCSs of two scheduled cells (PDSCH cells), is applied;
[Fig. 14] FIG. 14 is a diagram illustrating an example of a case where, for each of two scheduled cells (PDSCH cells), a value associated with the SCS is applied;
[Fig. 15] FIG. 15 is a diagram showing a relationship between |µPDCCH - µPDSCH| and a value of a PDSCH reception preparation time;
[Fig. 16] FIG. 16 is a diagram showing an operation example; [Fig. 17] FIG. 17 is a diagram showing an operation example; [Fig. 18] FIG. 18 is a diagram showing a configuration example of a base station 10;
[Fig. 19] FIG. 19 is a diagram showing a configuration example of a terminal 20;
[Fig. 20] FIG. 20 is a diagram showing an example of a hardware configuration of the base station 10 or the terminal 20 according to the embodiment of the present invention; and [Fig. 21] FIG. 21 is a diagram showing a configuration example of a vehicle.

### Detailed Description of the Invention

Hereinafter, an embodiment of the present invention will be described with reference to the drawings. The embodiment described below is an example, and the embodiment to which the present invention is applied is not limited to the following embodiment.

In the operation of the radio communication system according to the embodiment of the present invention, existing techniques are used as appropriate. The existing technology is, for example, existing LTE or existing NR, but is not limited to existing LTE and NR.

In addition, in the embodiments of the present invention described below, terms such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH) used in the existing LTE or NR are used. This is for convenience of description, and signals, functions, and the like similar to these may be referred to by other names. The above-mentioned terms in NR correspond to NR-SS, NR-PSS, NR-SSS, NR-PBCH, NR-PRACH and the like. However, even a signal used for NR is not necessarily specified as "NR -".

In the embodiments of the present invention, the duplex scheme may be a time division duplex (TDD) scheme, a frequency division duplex (FDD) scheme, or another scheme (for example, flexible duplex).

In the embodiments of the present invention, a radio parameter or the like being "configured" may mean that a predetermined value is pre-configured or that a radio parameter notified from the base station 10 or the terminal 20 is configured.

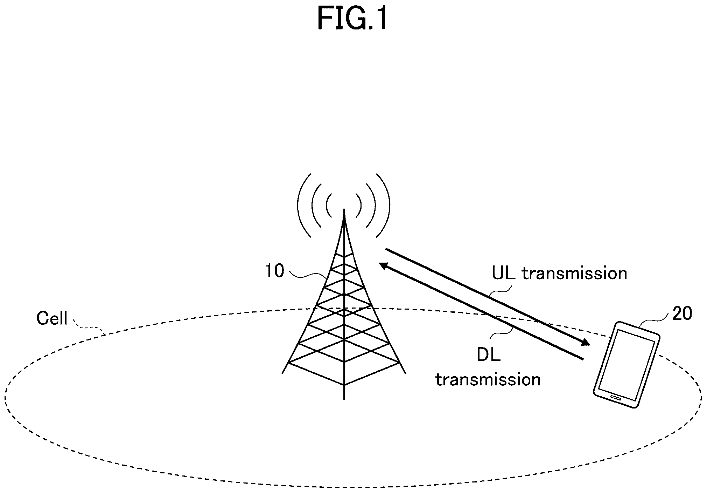

FIG. 1 is a diagram showing a configuration example (1) of a radio communication system according to an embodiment of the present invention. As shown in FIG. 1, the radio communication system according to the embodiment of the present invention includes a base station 10 and a terminal 20. Although one base station 10 and one terminal 20 are illustrated in FIG. 1, this is merely an example, and a plurality of base stations 10 and a plurality of terminals 20 may be provided.

The base station 10 is a communication apparatus that provides one or more cells and performs radio communication with the terminal 20. The physical resource of the radio signal is defined in a time domain and a frequency domain, and the time domain is defined by orthogonal frequency division multiplexing (OFDM). The frequency domain may be defined by the number of symbols, or the frequency domain may be defined by the number of subcarriers or the number of resource blocks. The base station 10 transmits a synchronization signal and system information to the terminal 20. The synchronization signal is, for example, NR-PSS and NR-SSS. The system information is transmitted by, for example, NR-PBCH and is also referred to as broadcast information. The synchronization signal and the system information may be referred to as an SSB (SS/PBCH block). As illustrated in FIG. 1, the base station 10 transmits a control signal or data to the terminal 20 in downlink (DL), and receives a control signal or data from the terminal 20 in uplink (UL). Both the base station 10 and the terminal 20 can transmit and receive signals by performing beamforming. In addition, both the base station 10 and the terminal 20 can apply communication by multiple input multiple output (MIMO) to DL or UL. Both the base station 10 and the terminal 20 may perform communication via a secondary cell (SCell) and a primary cell (PCell) by carrier aggregation (CA). Furthermore, the terminal 20 may perform communication via a primary cell of the base station 10 and a primary secondary cell group cell (PSCell:Primary SCG Cell) of another base station 10 by dual connectivity (DC).

The terminal 20 is a communication apparatus having a radio communication function, such as a smartphone, a mobile phone, a tablet, a wearable terminal, and a machine-to-machine (M2M) communication module. As illustrated in FIG. 1, the terminal 20 receives a control signal or data from the base station 10 in DL and transmits a control signal or data to the base station 10 in UL, thereby using various communication services provided by the radio communication system. The terminal 20 receives various reference signals transmitted from the base station 10 and measures the channel quality based on the reception result of the reference signal.

The terminal 20 can perform carrier aggregation in which a plurality of cells (a plurality of component carriers (CCs)) are aggregated to perform communication with the base station 10. In carrier aggregation, one PCell (Primary cell) and one or more SCells (Secondary cell) are used. Also, a PUCCH-SCell with a PUCCH may be used.

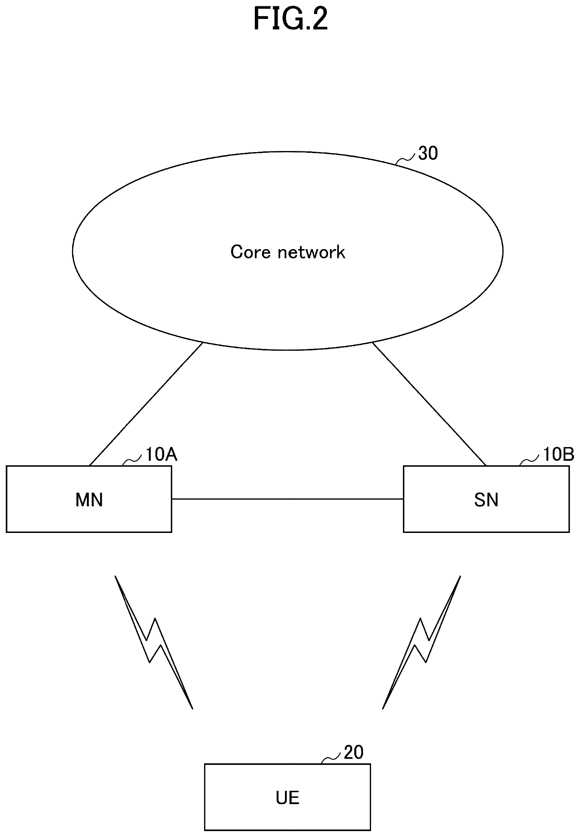

FIG. 2 is a diagram for explaining an example (2) of the radio communication system according to the embodiment of the present invention. FIG. 2 illustrates a configuration example of a radio communication system in a case where dual connectivity (DC) is executed. As shown in FIG. 2, the base stations 10A and 10B are provided as a master node (MN) and a secondary node (SN), respectively. The base stations 10A and 10B are connected to a core network. The terminal 20 can communicate with both the base stations 10A and 10B.

A cell group provided by the base station 10A serving as the MN is referred to as a master cell group (MCG), and a cell group provided by the base station 10B serving as the SN is referred to as a secondary cell group (SCG). In DC, the MCG is formed with one PCell and one or more SCells, and the SCG is formed with one PSCell (Primary SCG Cell) and one or more SCells.

The processing operation in the present embodiment may be executed by the system configuration shown in FIG. 1, the system configuration shown in FIG. 2, or other system configurations.

In 3GPP, studies are being conducted to enhance operation in multi-carrier. In the studies, a method of scheduling a PDSCH (or a PUSCH) by a single DCI (Single Downlink Control Information) in a plurality of cells is studied. In the following description, "carrier", "CC" and "cell" may be used synonymously.

### (Problem)

The method of scheduling multiple PDSCHs/PUSCHs by a single DCI has an advantage of reducing a load (for example, the number of blind decodes) due to monitoring of DCI (PDCCH), compared to a method of preparing DCI for each CC and performing for each CC. Further, the total PDCCH overhead can be reduced as the size of a single DCI is made smaller than the size of the conventional DCI * the number of CCs.

On the other hand, as a drawback, the instruction content cannot be flexibly changed for each CC. For enabling flexible change of the instruction content, the size of a single DCI increases, which leads to a deterioration in the error rate of PDCCH and an increase in overhead. Further, when decoding of PDCCH is failed, data reception of all of a plurality of CCs fails.

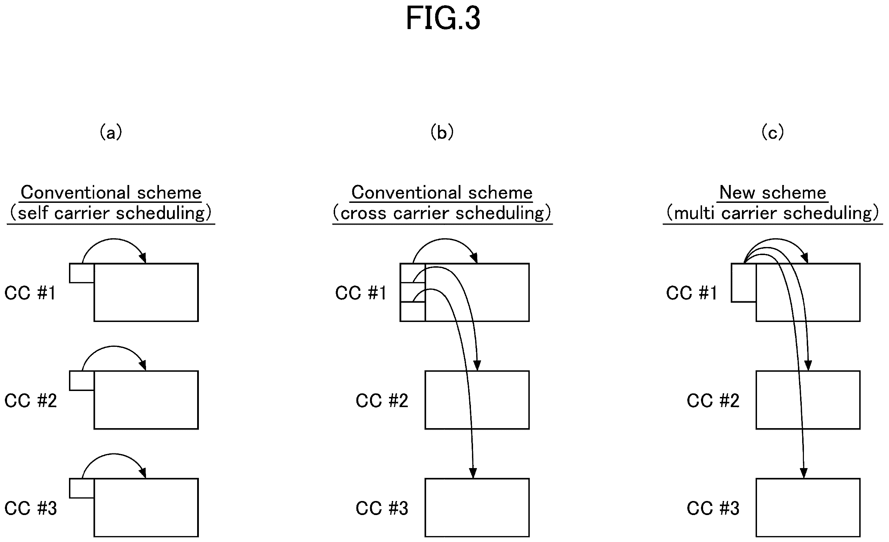

FIG. 3(a) shows an example (1) of a scheduling operation. As shown in FIG. 3 (a), in the conventional self-carrier scheduling, DCI is transmitted for each CC, and PDSCH/PUSCH is scheduled in the CC.

FIG. 3(b) illustrates an example (2) of a scheduling operation. As shown in FIG. 3 (b), in the conventional cross-carrier scheduling, a plurality of DCIs in one CC schedules PDSCH/PUSCH in a plurality of CCs.

FIG. 3(c) shows an example (3) of the scheduling operation. As shown in FIG. 3 (c), in multi-carrier scheduling, a single DCI schedules PDSCH/PUSCH in each CC.

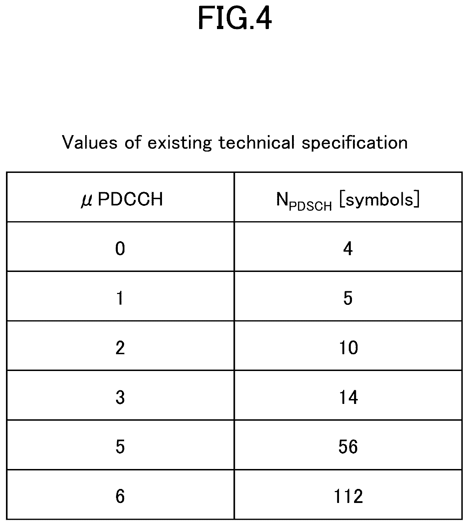

With respect to the above, in Non-Patent Document 1 (existing use, TS38. 214, Chapter 5.5), as shown in FIG.4, PDSCH reception preparation time is defined being associated with SCS (subcarrier spacing) of PDCCH when performing cross-carrier scheduling. In FIG. 4, µPDCCH represents SCS of PDCCH, and N_{PDSCH} represents the PDSCH reception preparation time of a carrier (cell) scheduled by the PDCCH.

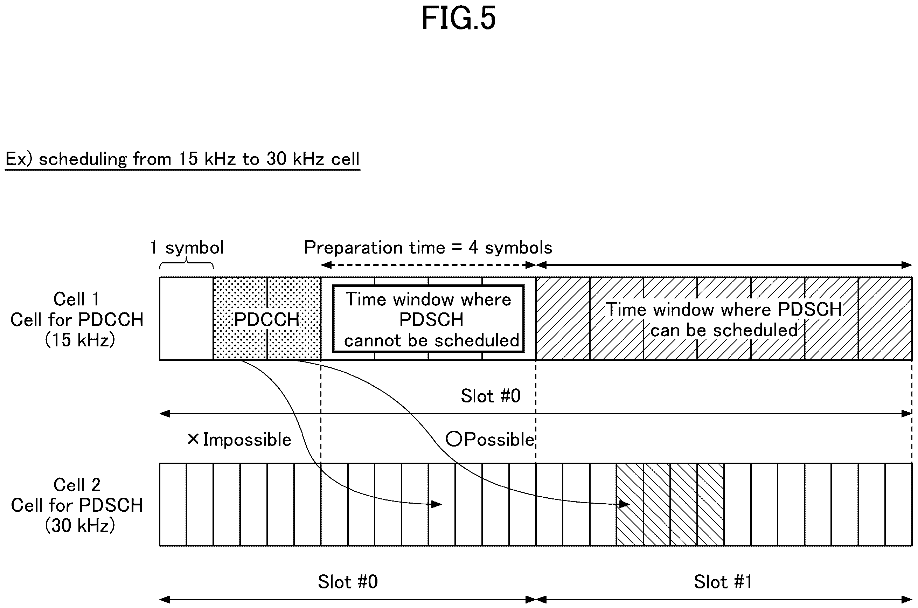

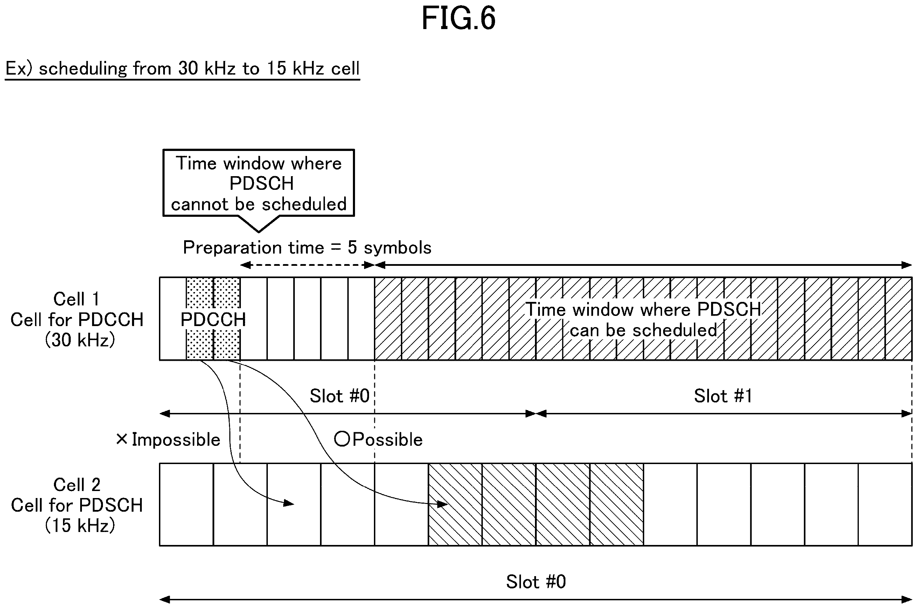

An operation example in which the PDSCH reception preparation time described in Non-Patent Document 1 is used will be described with reference to FIGs. 5 and 6. Note that, hereinafter, a cell that performs scheduling of a PDSCH by a PDCCH may be referred to as a scheduling cell (or a PDCCH cell), and a cell in which scheduling of a PDSCH is performed by the PDCCH may be referred to as a scheduled cell (or a PDSCH cell) .

FIG. 5 illustrates an example in which SCS of cell 1, which is a scheduling cell, is 15kHz and SCS of cell 2, which is a scheduled cell, is 30kHz. The PDSCH reception preparation time is a time length of 4 symbols in the SCS of the cell 1.

In the example of FIG. 5, the terminal 20 does not assume that a PDSCH is scheduled in the cell 2 during a period from the time point of the reception end of a PDCCH of the cell 1 to the time point after four symbols. Note that the end of PDCCH reception may be rephrased as an end of DCI reception.

FIG. 6 illustrates an example in which SCS of the cell 1, which is a scheduling cell, is 30kHz and SCS of the cell 2, which is a scheduled cell, is 15kHz. The PDSCH reception preparation time is a time length of 5 symbols in the SCS of the cell 1.

In the example of FIG. 6, the terminal 20 does not assume that a PDSCH is scheduled in the cell 2 during a period from the time point of the reception end of the PDCCH of the cell 1 to the time point after 5 symbols.

In the multi-carrier scheduling shown in FIG. 3 (c) assumed in the present embodiment, when a PDSCH is scheduled for a plurality of cells by one DCI, the relationship of SCS between the cell that performs scheduling by a PDCCH and the cell in which a PDSCH is scheduled may be various.

For example, a relationship is assumed in which a certain scheduled cell (PDSCH cell) has a larger SCS than a scheduling cell (PDCCH cell), and another scheduled cell (PDSCH cell) has a smaller SCS than the scheduling cell (PDCCH cell).

In single DCI multi-carrier scheduling, it is necessary to appropriately define (or configure) the PDSCH reception preparation time in consideration of the relationship of SCS between the PDCCH cell and a plurality of PDSCH cells. When the PDSCH reception preparation time is not appropriately defined (or configured), the terminal 20 and the base station 10 may not appropriately operate.

### (Outline of Embodiment)

Hereinafter, as techniques for solving the above-described problem, a first embodiment, a second embodiment, and a third embodiment will be described. The outline of each of the first embodiment, the second embodiment, and the third embodiment is as follows.

### <First Embodiment>

In the first embodiment, the PDSCH reception preparation time is defined/configured in association with SCS of the scheduling cell (PDCCH cell).

### <Second Embodiment>

In the second embodiment, the PDSCH reception preparation time is defined/configured in association with SCS of the scheduled cell (PDSCH cell).

### <Third Embodiment>

In the third embodiment, the value of the PDSCH reception preparation time is defined/configured according to the relationship of SCS between the scheduling cell (PDCCH cell) and the scheduled cell (PDSCH cell).

### <Matters common to First to Third Embodiments>

In the first to third embodiments, there are an option of defining/configuring the same preparation time for all PDSCH cells and an option of defining/configuring different preparation times for the respective PDSCH cells.

In the first to third embodiments, different preparation times may be defined/configured according to the capability information (UE capability) of the terminal 20.

### (Basic Operation Example)

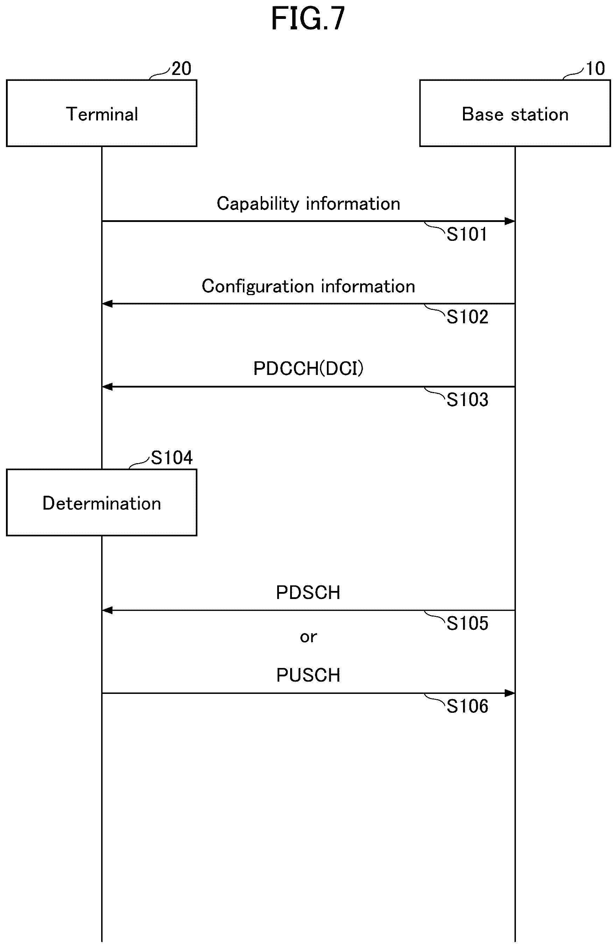

A basic operation example common to the first to third embodiments will be described with reference to FIG. 7. In S101, the terminal 20 transmits capability information to the base station 10. Note that S101 may not be performed.

In S102, the base station 10 transmits configuration information to the terminal 20. This configuration information is, for example, preparation time for each SCS and the like that the terminal 20 should assume. However, as for the preparation time and information related to this, such a configuration may not be performed. That is, the preparation time and information related thereto may be configured in the terminal 20 and the base station 10 in advance.

In S103, the terminal 20 receives a DCI (downlink control information) transmitted from the base station 10 by a PDCCH.

Note that, although the first to third embodiments are described by taking PDSCH reception as an example, the techniques of the first to third embodiments can be applied to PUSCH transmission and the like as described later, and thus both are illustrated in FIG. 7.

In S104, the terminal 20 determines a reception resource of a PDSCH or a transmission resource of a PUSCH based on the DCI, and performs PDSCH reception/PUSCH transmission in S105/S106.

In S104, the terminal 20 performs an operation assuming that PDSCH reception/PUSCH transmission is not scheduled during a period of time indicated by the PDSCH reception preparation time (or the PUSCH transmission preparation time) from a reception end time point of a PDCCH (or a reception end time point of a DCI).

The base station 10 performs scheduling so that PDSCH reception/PUSCH transmission does not occur during a period of time indicated by the PDSCH reception preparation time (or the PUSCH transmission preparation time) from the reception end time point of the PDCCH (or the reception end time point of the DCI) in the terminal 20. That is, the base station 10 creates the DCI so that PDSCH reception/PUSCH transmission does not occur during a period of time indicated by the PDSCH reception preparation time (or the PUSCH transmission preparation time) from the reception end time point of the PDCCH (or the reception end time point of the DCI) in the terminal 20.

Note that the "reception end time point of the PDCCH" may be rephrased as "end time point of the time domain of the resource of the PDCCH".

### (First Embodiment)

Next, a first embodiment will be described. In the first embodiment, in the single DCI multi-carrier scheduling, a PDSCH reception preparation time is defined/configured in association with SCS of a scheduling cell (PDCCH cell).

The relationship between SCS of a scheduled cell (PDSCH cell) and SCS of a scheduling cell (PDCCH cell) is arbitrary. For example, SCS of at least one scheduled cell (PDSCH cell) among one or a plurality of scheduled cells (PDSCH cells) may be larger or smaller than SCS of the scheduling cell (PDCCH cell). In addition, SCS of all scheduled cells (PDSCH cells) and SCS of the scheduling cell may be the same.

The value of the PDSCH reception preparation time may be the same as the value in the existing technical specification, or a new value may be defined for single DCI multi-carrier scheduling for at least one PDCCH SCS.

The value (for example, a newly defined value) of the PDSCH reception preparation time in the first embodiment may be defined in the technical specification, or the base station 10 may notify the terminal 20 of the value by higher layer signaling or a DCI.

Note that, as a matter common to the first embodiment to the third embodiment, when information is notified by higher layer signaling, the notification (configuration) may be performed in S102 of FIG. 7. When the information is notified by a DCI, the information may be notified by a DCI of scheduling of a PDSCH, or the information may be notified by a DCI different from the DCI of scheduling of the PDSCH.

In addition, as the value of the PDSCH reception preparation time in the first embodiment, a different value may be defined in the technical specification according to a capability of the terminal 20, or such a value may be notified from the base station 10 to the terminal 20 by higher layer signaling or a DCI.

In addition, when SCS of all scheduled cells (PDSCH cells) and SCS of the scheduling cell are the same, the PDSCH reception preparation time may be set to 0 or a value other than 0. Note that, when SCS of the scheduled cell (PDSCH cell) and SCS of the scheduling cell are the same, the SCS is not switched in the terminal 20, and thus the PDSCH reception preparation time may be set to 0.

In the first embodiment, scheduling can be performed in a scheduling cell (PDCCH cell) by a DCI, in the scheduling cell, that schedules a plurality of cells, which is called self-carrier scheduling. When self-carrier scheduling is also supported by a DCI for scheduling a plurality of cells in the scheduling cell (PDCCH cell), the PDSCH reception preparation time may be applied to the self-carrier scheduling, or the PDSCH reception preparation time may not be applied to the self-carrier scheduling.

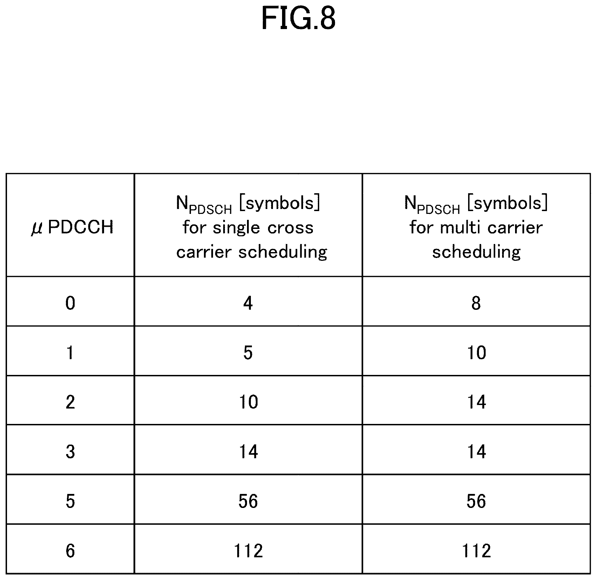

An example of a value of the PDSCH reception preparation time when the value is newly defined in the technical specification for single DCI multi-carrier scheduling is shown in FIG. 8. In the example shown in FIG. 8, new values are defined for the existing technical specifications only for the case where PDCCH SCS is 15/30/60 kHz.

For example, when µPDCCH = 0 (when SCS of PDCCH Cell = 15kHz), the terminal 20 operating according to the rule of FIG. 8 does not assume that a PDSCH is scheduled during a period within 8 symbols at SCS = 15kHz from the end of reception of the PDCCH. In addition, for example, in a case where µPDCCH = 0 (in a case where SCS of PDCCH Cell = 15kHz), the base station 10 operating according to the rule of FIG. 8 does not create a DCI in which PDSCH reception is performed during a period within 8 symbols at SCS = 15kHz from the end of the PDCCH.

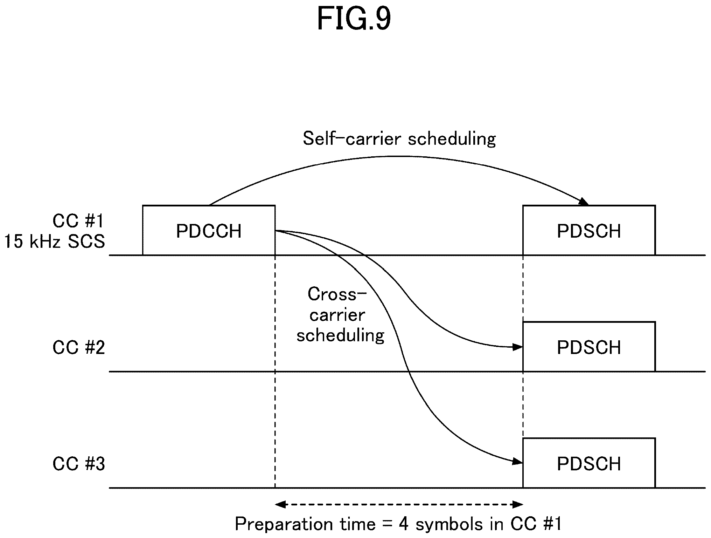

FIG. 9 illustrates an example of a case where the PDSCH reception preparation time is applied to self-carrier scheduling when cross-carrier scheduling and self-carrier scheduling of a plurality of cells by a single DCI are simultaneously supported. In the example of FIG. 9, the PDSCH reception preparation time is 4 symbols in CC #1 (PDCCH cell) . Therefore, a PDSCH reception preparation time of 4 symbols is applied to each of CC #1 to CC #3.

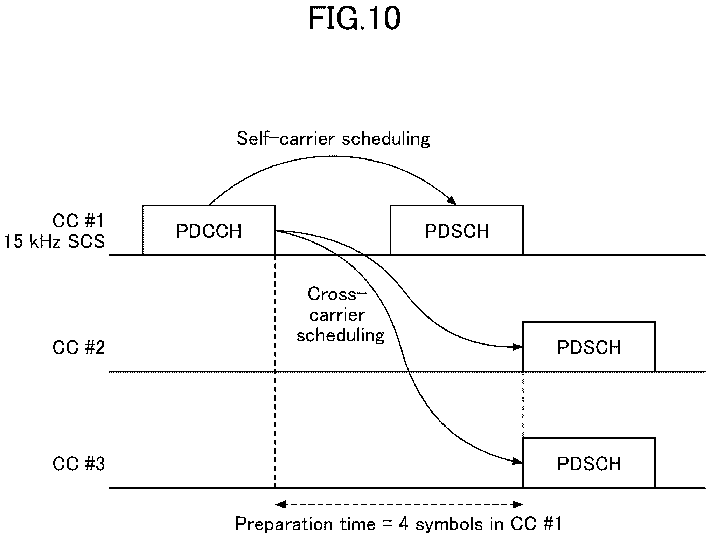

FIG. 10 illustrates an example of a case where the PDSCH reception preparation time is not applied only to self-carrier scheduling when cross-carrier scheduling and self-carrier scheduling of a plurality of cells by a single DCI are simultaneously supported. In the example of FIG. 10, the PDSCH reception preparation time is 4 symbols in CC #1 (PDCCH cell) . Therefore, the PDSCH reception preparation time of 4 symbols is applied to each of CC #2 and CC #3. However, the PDSCH reception preparation time is not applied to CC #1.

In the first embodiment, since the PDSCH reception preparation time is defined/configured in association with SCS of a scheduling cell (PDCCH cell), the terminal 20 and the base station 10 can operate appropriately.

### (Second Embodiment)

Next, a second embodiment will be described. In the second embodiment, in the single DCI multi-carrier scheduling, the PDSCH reception preparation time is defined/configured in association with SCS of a scheduled cell (PDSCH cell).

The relationship between SCS of the scheduled cell (PDSCH cell) and SCS of the scheduling cell (PDCCH cell) is arbitrary. For example, the SCS of at least one scheduled cell (PDSCH cell) among one or a plurality of scheduled cells (PDSCH cells) may be larger or smaller than the SCS of the scheduling cell (PDCCH cell) . In addition, the SCS of all scheduled cells (PDSCH cells) and the SCS of the scheduling cell may be the same.

The value of the PDSCH reception preparation time in the second embodiment may be defined in the technical specification, or may be notified from the base station 10 to the terminal 20 by higher layer signaling or a DCI.

In addition, as the value of the PDSCH reception preparation time in the second embodiment, a different value may be defined in the technical specification according to the capability of the terminal 20, or such a value may be notified from the base station 10 to the terminal 20 by higher layer signaling or a DCI.

In the second embodiment, the value of the PDSCH reception preparation time is also defined/configured by the number of symbols, for example. The number of symbols varies depending on SCS.

In the second embodiment, the value of the PDSCH reception preparation time may be defined/configured by the number of symbols in the scheduling cell (PDCCH cell) or may be defined/configured by the number of symbols in the scheduled cell (PDSCH cell). The number of symbols of which cell for determining the value of the PDSCH reception preparation time may be defined in the technical specification, or may be notified from the base station 10 to the terminal 20 by higher layer signaling or a DCI.

In the first embodiment, it is assumed that the value of the PDSCH reception preparation time is defined/configured by the number of symbols in the scheduling cell (PDCCH cell), but the present invention is not limited thereto, and the value of the PDSCH reception preparation time may be defined/configured by the number of symbols in the scheduled cell (PDSCH cell) .

In the second embodiment, self-carrier scheduling is also possible. When self-carrier scheduling is also supported by a DCI for scheduling a plurality of cells in the scheduling cell (PDCCH cell), the PDSCH reception preparation time may be applied to the self-carrier scheduling, or the PDSCH reception preparation time may not be applied to the self-carrier scheduling.

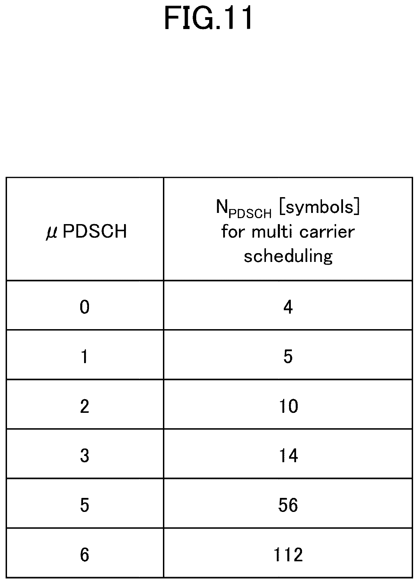

FIG. 11 illustrates an example of a value of the PDSCH reception preparation time in a case where the PDSCH reception preparation time is defined in the technical specification in association with SCS of the scheduled cell (PDSCH cell) in single DCI multi-carrier scheduling.

Here, as an example, the number of symbols used to determine the PDSCH reception preparation time is the number of symbols in a scheduled cell (PDSCH cell) having SCS associated with the number of symbols.

For example, when µPDSCH of a scheduled cell (PDSCH cell) is 0 (when SCS of PDSCH cell is 15kHz), the terminal 20 operating according to the rule of FIG. 11 does not assume a PDSCH scheduled during a period within 4 symbols at SCS = 15kHz from the reception end time point of a PDCCH. Further, when µPDCCH = 0 (when SCS of PDCCH Cell = 15kHz), for example, the base station 10 operating according to the rule of FIG. 11 does not perform PDSCH scheduling during a period within 4 symbols at SCS = 15kHz from the end of the PDCCH.

In the second embodiment, since there may be a plurality of scheduled cells (PDSCH cells) which are the basis of the PDSCH reception preparation time, there are following option 1 and option 2 for the method of applying the PDSCH reception preparation time. The option in the second embodiment is referred to as "second embodiment option", and the option in the third embodiment is referred to as "third embodiment option".

### <Second Embodiment Option 1 for Application of PDSCH Reception Preparation Time>

In the second embodiment option 1, the same PDSCH reception preparation time is applied to all scheduled cells. Regarding a method of determining a preparation time associated with SCS of which PDSCH cell, there are the following second embodiment options 1-1 to 1-3.

### Second Embodiment Option 1-1:

The PDSCH reception preparation time is set to a value associated with the largest (or smallest) SCS among SCSs of one or a plurality of scheduled cells (PDSCH cells).

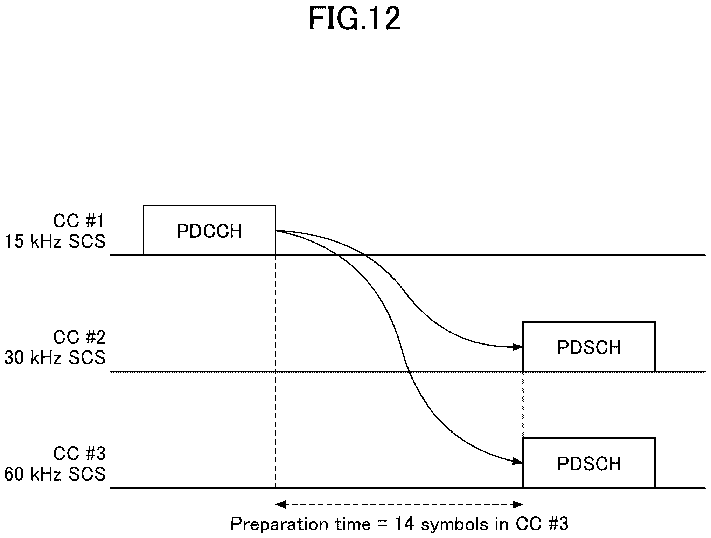

FIG. 12 illustrates an example of a case where a value associated with 60kHz which is the largest SCS among SCSs of two scheduled cells (PDSCH cells) is applied as an example of the second embodiment option 1-1. That is, in the example of FIG. 12, the terminal 20 does not assume PDSCH reception during a period within 14 symbols in CC #3 from the end of a PDCCH in CC #1.

### Second Embodiment Option 1-2:

The PDSCH reception preparation time is set to a value associated with SCS having the largest (or smallest) absolute value of the difference from SCS of the scheduling cell (PDCCH cell), among SCSs of one or a plurality of scheduled cells (PDSCH cells). In the first to third embodiments, the "difference" is assumed to be a difference in a value represented by a numerology, but is not limited thereto, and may be a difference in a value of kHz.

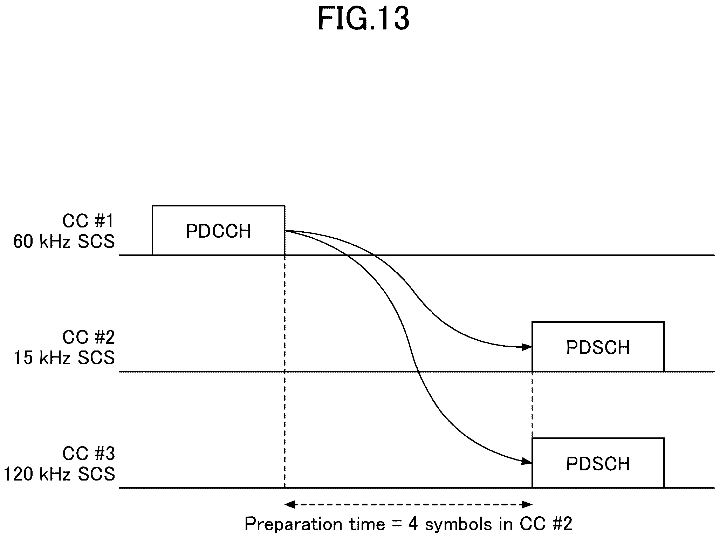

FIG. 13 illustrates an example of a case where a value associated with 15kHz, which is SCS having the largest absolute difference from SCS of the scheduling cell (PDCCH cell) among SCSs of two scheduled cells (PDSCH cells), is applied as an example of the second embodiment option 1-2.

In the example of FIG. 13, the terminal 20 assumes that a PDSCH is not scheduled during a period within 4 symbols in CC #2 from the end of the PDCCH in CC #1.

### Second Embodiment Option 1-3:

The base station 10 notifies the terminal 20 of the value of the PDSCH reception preparation time by higher layer signaling or a DCI, and the terminal 20 assumes a period during which a PDSCH is not scheduled by the value.

### <Second Embodiment Option 2 for Application of PDSCH Reception Preparation Time>

In the second embodiment option 2, basically, for each scheduled cell (PDSCH Cell), according to its SCS, a PDSCH reception preparation time is individually applied. The method of determining the PDSCH reception preparation time to be applied includes the following second embodiment option 2-1, second embodiment option 2-2, and second embodiment option 2-3.

### Second Embodiment Option 2-1:

In the second embodiment option 2-1, a value associated with SCS of each scheduled cell (PDSCH cell) is used as the value of the PDSCH reception preparation time. For example, if the SCS is different between two scheduled cells (PDSCH cells), the PDSCH reception preparation time is different between the two scheduled cells (PDSCH cells).

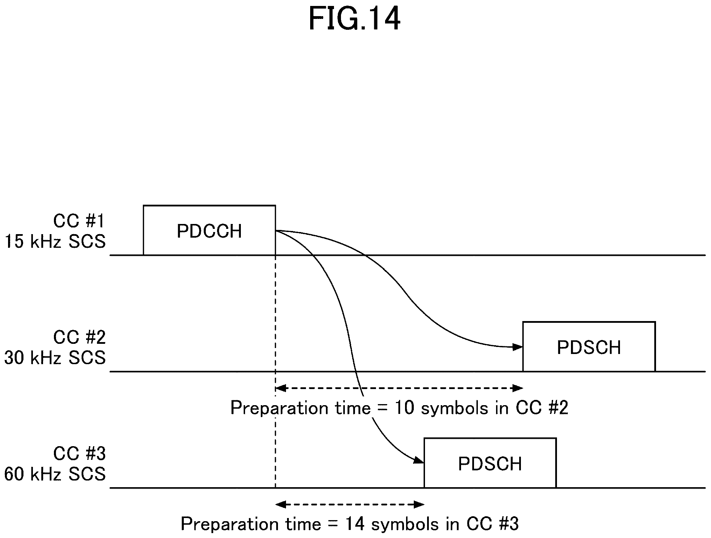

FIG. 14 illustrates an example of a case where, for each of two scheduled cells (PDSCH cells), a value associated with SCS of the cell is applied, as an example of the second embodiment option 2-1. That is, in the example of FIG. 14, the terminal 20 does not assume that a PDSCH of CC #2 is scheduled during a period of 10 symbols in CC #2 from the end of a PDCCH in CC #1. Furthermore, the terminal 20 does not assume that a PDSCH of CC #3 is scheduled during a period of 14 symbols in CC #3 from the end of a PDCCH in CC #1.

### Second Embodiment Option 2-2:

In Second Embodiment Option 2-2, scheduled cells (PDSCH cells) are divided into one or more groups according to SCS of the scheduled cells (PDSCH cells), and the same value is applied to each group.

For example, scheduled cells (PDSCH cells) having SCS larger than that of a scheduling cell (PDCCH cell) are grouped into group 1, scheduled cells (PDSCH cells) having SCS smaller than that of a scheduling cell (PDCCH cell) are grouped into group 2, a value 1 is applied to each scheduled cell (PDSCH cell) of group 1, and a value 2 is applied to each scheduled cell (PDSCH cell) of group 2.

In addition, the scheduled cells (PDSCH cells) may be divided into one or more groups according to the difference (for example, the difference in numerology) between the SCS of the scheduled cell (PDSCH cell) and the SCS of the scheduling cell (PDCCH cell), and the same value may be applied to each group.

As a method of determining a value of the PDSCH reception preparation time in the second embodiment option 2-2, there are the following second embodiment options 2-2-1 and 2-2-2.

### Second embodiment option 2-2-1:

As a value of the PDSCH reception preparation time, a value associated with SCS of a scheduling cell (PDCCH cell) is used.

### Second embodiment option 2-2-2:

As a value of the PDSCH reception preparation time, a value determined by the method described in any of second embodiment options 1-1 to 1-3 is used.

### Second embodiment option 2-3:

The base station 10 notifies the terminal 20 of a value of the PDSCH reception preparation time by higher layer signaling or a DCI, and the terminal 20 assumes a period during which a PDSCH is not scheduled by the value.

In the second embodiment, since the PDSCH reception preparation time is defined/configured in association with SCS of the scheduled cell (PDSCH cell), the terminal 20 and the base station 10 can operate appropriately.

### (Third Embodiment)

Next, a third embodiment will be described. In the third embodiment, in single DCI multi-carrier scheduling, a value is defined/configured according to a relationship between SCS of a scheduling cell (PDCCH cell) and SCS of a scheduled cell (PDSCH cell).

The relationship between the SCS of the scheduled cell (PDSCH cell) and the SCS of the scheduling cell (PDCCH cell) is arbitrary. For example, SCS of at least one scheduled cell (PDSCH cell) among one or a plurality of scheduled cells (PDSCH cells) may be larger or smaller than SCS of the scheduling cell (PDCCH cell) . In addition, SCS of all scheduled cells (PDSCH cells) and SCS of the scheduling cell may be the same.

The value of the PDSCH reception preparation time in the third embodiment may be defined in the technical specification, or may be notified from the base station 10 to the terminal 20 by higher layer signaling or a DCI.

In addition, as the value of the PDSCH reception preparation time in the third embodiment, a different value may be defined in the specification according to the capability of the terminal 20, or such a value may be notified from the base station 10 to the terminal 20 by higher layer signaling or DCI.

In the third embodiment, the value of the PDSCH reception preparation time is also defined/configured by the number of symbols, for example. The number of symbols varies depending on SCS.

In the third embodiment, the value of the PDSCH reception preparation time may be defined/configured by the number of symbols in the scheduling cell (PDCCH cell) or may be defined/configured by the number of symbols in the scheduled cell (PDSCH cell). The number of symbols of which cell for determining the value of the PDSCH reception preparation time may be defined in the technical specification, or may be notified from the base station 10 to the terminal 20 by higher layer signaling or a DCI.

A specific value of the PDSCH reception preparation time may be defined according to, for example, a difference between SCS of the scheduling cell (PDCCH cell) and SCS of the scheduled cell (PDSCH cell). The "difference" may be an absolute value of a difference in the numerology. The value of the PDSCH reception preparation time may be defined/configured according to the combination of the SCS of the scheduled cell (PDSCH cell) and the SCS of the scheduling cell (PDCCH cell) .

In the third embodiment, self-carrier scheduling is also possible. When self-carrier scheduling is also supported by a DCI for scheduling a plurality of cells in a scheduling cell (PDCCH cell), the PDSCH reception preparation time may be applied to the self-carrier scheduling, and the PDSCH reception preparation time may not be considered for the self-carrier scheduling. There are a third embodiment option 1 and a third embodiment option 2 below for a method of applying the PDSCH reception preparation time.

### <Third Embodiment Option 1 for Application of PDSCH Reception Preparation Time>

In the third embodiment option 1, the same PDSCH reception preparation time is applied to all scheduled cells. Regarding the method of determining the preparation time to be applied, there are the following third embodiment options 1-1 to 1-2.

### Third Embodiment Option 1-1:

In the third embodiment option 1-1, the value associated with the maximum (or minimum) difference (|µPDCCH - µPDSCH|) among differences (|µPDCCH - µPDSCH |) between SCS of scheduled cells (PDSCH cell) and SCS of a scheduling cell (PDCCH cell) for one or more scheduled cells (PDSCH cells) is used as the value for the applicable PDSCH reception preparation time.

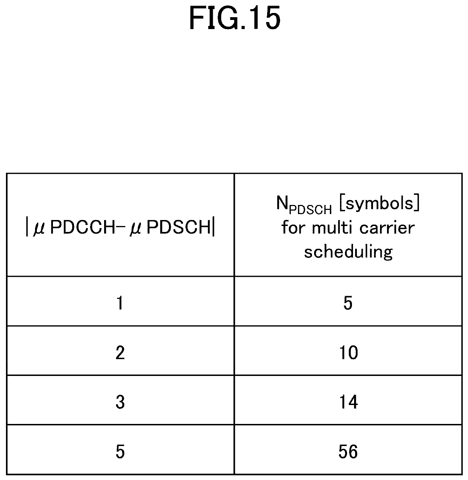

Here, for example, it is assumed that the relationship between a value of |µPDCCH - µPDSCH | and a value of the PDSCH reception preparation time is defined as shown in FIG. 15. The number of symbols of N_{PDSCH} is the number of symbols of a cell of a PDCCH.

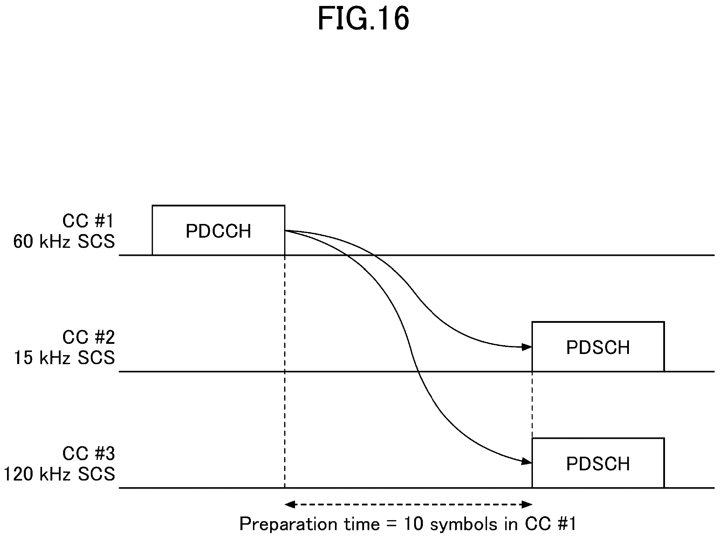

At this time, as illustrated in FIG. 16, in a situation where CC #1 (PDCCH cell), CC #2 (PDSCH cell), and CC #3 (PDSCH cell) are configured in the terminal 20, a value associated with the maximum difference (µPDCCH - µPDSCH) among differences (|µPDCCH - µPDSCH|) between the SCS of the scheduled cell (PDSCH cell) and the SCS of the scheduling cell (PDCCH cell) is set as the value of the PDSCH reception preparation time to be applied. The terminal 20 (and the base station 10) applies the number of symbols 10 associated with 2, which is the larger of |3-2| (the difference between 120kHz and 60kHz) and |2-0| (the difference between 15kHz and 60kHz).

### Third Embodiment Option 1-2:

The base station 10 notifies the terminal 20 of a value of the PDSCH reception preparation time by higher layer signaling or a DCI, and the terminal 20 assumes a period during which a PDSCH is not scheduled by the value.

### <Third Embodiment Option 2 for Application of PDSCH Reception Preparation Time>

In the third embodiment option 2, basically, the PDSCH reception preparation time is individually applied to each scheduled cell (PDSCH cell). As a method of determining the PDSCH reception preparation time to be applied, there are the following third embodiment option 2-1 and third embodiment option 2-2.

### Third Embodiment Option 2-1:

In the third embodiment option 2-1, for each scheduled cell (PDSCH cell), a value associated with a difference

(|µPDCCH - µPDSCH|) between SCS of the scheduled cell (PDSCH cell) and SCS of the scheduling cell (PDCCH cell) is set as the value of the PDSCH reception preparation time applied to the scheduled cell (PDSCH cell).

Here, for example, it is assumed that the relationship between the value of |µPDCCH - µPDSCH| and the value of PDSCH reception preparation time is defined as shown in FIG. 15. The number of symbols of N_{PDSCH} is the number of symbols of the cell of the corresponding PDSCH.

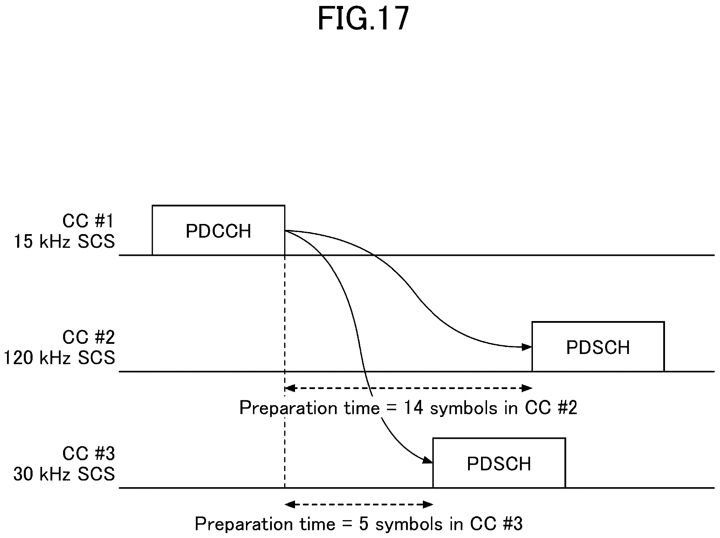

At this time, as illustrated in FIG. 17, in a situation in which CC #1 (PDCCH Cell), CC #2 (PDSCH Cell), and CC #3 (PDSCH Cell) are configured in the terminal 20, since |µPDCCH - µPDSCH| of CC #2 is |0 - 3|, 14 (symbols) in CC #2 is applied as a value of the PDSCH reception preparation time. Further, since |µPDCCH - µPDSCH| of CC #3 is |0 - 11, 5 (symbols) in CC #3 is applied as the value of the PDSCH reception preparation time.

In the third embodiment, the PDSCH reception preparation time is defined/configured according to the relationship between SCS of the scheduling cell (PDCCH cell) and SCS of the scheduled cell (PDSCH cell), and thus the terminal 20 and the base station 10 can operate appropriately.

### (Common Example and Variation of First to Third Embodiments)

Here, an example applied to the first to third embodiments in common will be described.

### <UE capability>

PDSCH reception preparation time which varies according to UE capability may be defined/configured. For example, assuming that UE capability-A, UE capability-B, and UE capability-C are defined, PDSCH reception preparation times corresponding to UE capability-A, UE capability-B, and UE capability-C respectively may be defined/configured. As an example, for a table as shown in FIG. 8, a table corresponding to UE capability-A, a table corresponding to UE capability-B, and a table corresponding to UE capability-C are defined, and the terminal 20 may determine the PDSCH reception preparation time with reference to a table corresponding to the UE capability of the terminal 20.

In addition, the operation examples (1) to (4) related to the UE capability may be performed as follows. Note that the following UE capability report is performed in, for example, S101 in FIG. 7.

### Operation Example (1):

A UE capability is defined for reporting that, when SCS of the scheduling cell (PDCCH cell) and SCS of all scheduled cells (PDSCH cells) are the same, the terminal 20 supports single DCI multi-carrier scheduling, and the terminal 20 reports the UE capability to the base station 10.

### Operation Example (2) :

A UE capability is defined for reporting that the terminal 20 supports single DCI multi-carrier scheduling including at least one scheduled cell (PDSCH cell) having SCS larger (or smaller) than SCS of the scheduling cell (PDCCH cell), and the terminal 20 reports the UE capability to the base station 10.

### Operation Example (3) :

A UE capability is defined for reporting the maximum difference between SCSs of the supported scheduling cell (PDCCH cell) and the scheduled cell (PDSCH cell), and the terminal 20 reports the UE capability to the base station 10.

### Operation Example (4):

A UE capability is defined for reporting that the terminal 20 supports monitoring of self-carrier scheduling by a DCI for a single DCI multi-carrier scheduling in a PCell/SCell/PScell, and the terminal 20 reports the UE capability to the base station 10.

### <About Unit of PDSCH Reception Preparation Time>

In the first to third embodiments, the unit of the PDSCH reception preparation time is the number of symbols. However, this is an example, and the unit of the PDSCH reception preparation time is not limited to the number of symbols.

For example, the unit of the PDSCH reception preparation time may be the number of slots (or the number of slots and the number of symbols), or may be an absolute time such as msec. When the unit of the PDSCH reception preparation time is the absolute time, it is not necessary to define/configure which cell (which SCS) is used as a reference for the number of symbols/the number of slots.

### <Regarding application target of preparation time>

In the first to third embodiments, a preparation time is applied for a PDSCH scheduled by a PDCCH. However, the target of application of the preparation time is not limited to the

### PDSCH.

The preparation time may be applied to a PUSCH scheduled by a PDCCH. The operation in this case is an operation in which reception of the PDSCH described in the first to third embodiments is replaced with transmission of the PUSCH.

Further, the target of the preparation time may be a signal or a channel other than the PDSCH and the PUSCH. For example, when the terminal 20 transmits UCI (uplink control information) or a reference signal by a schedule (including an instruction) by a PDCCH, the preparation time may be applied to the UCI or the reference signal. The operation in this case is also the same as the operation in the first to third embodiments.

The preparation time for a signal/channel scheduled by a PDCCH may be collectively referred to as "communication preparation time".

The operations described in the first to third embodiments are applicable not only to single DCI multi-carrier scheduling. For example, the operations described in the first to third embodiments can be applied to the cross-carrier scheduling illustrated in FIG.3(b).

Further, the channel for scheduling the communication to which the preparation time is applied is not limited to the PDCCH. For example, communication to which the preparation time is applied may be scheduled in a downlink channel other than the PDCCH.

### <Preparation Time Corresponding to the Number of Cells>

In the first to third embodiments, the preparation time may vary depending on the number of cells to be scheduled by a single DCI in the single DCI multi-carrier scheduling. For example, the preparation time in a case where the number of cells to be scheduled by a single DCI is N1 may be longer (or shorter) than the preparation time in a case where the number of cells to be scheduled by a single DCI is N2 (<N1).

### (Apparatus Configuration)

Next, functional configuration examples of the base station 10 and the terminal 20 that execute the processes and operations described above will be described.

### <Base station 10>

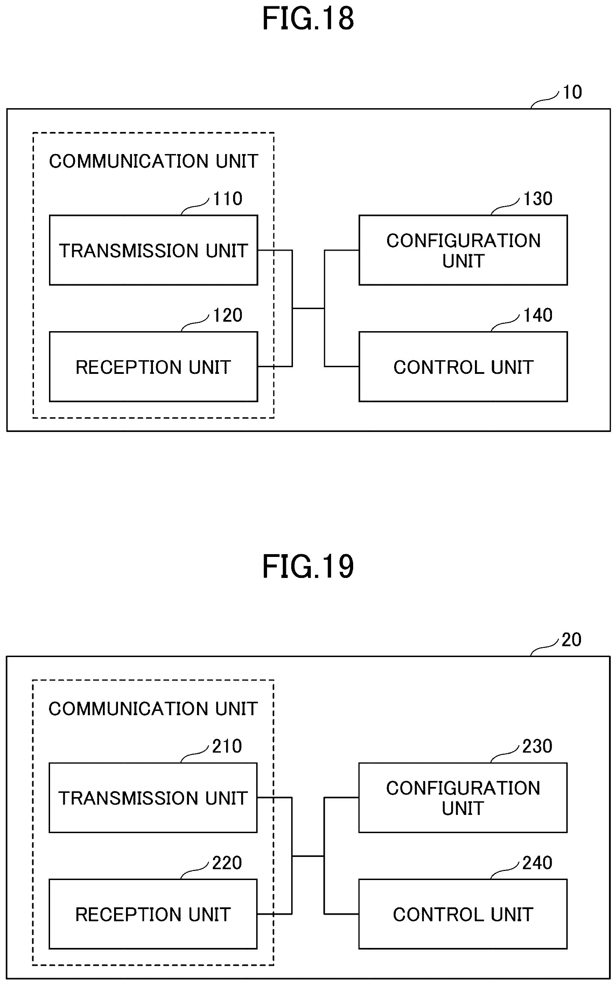

FIG. 18 is a diagram illustrating an example of a functional configuration of the base station 10. As illustrated in FIG. 18, the base station 10 includes a transmission unit 110, a reception unit 120, a configuration unit 130, and a control unit 140. The functional configuration shown in FIG. 18 is merely an example. The functional sections and the names of the functional units may be any as long as the operations according to the embodiment of the present invention can be executed. The transmission unit 110 and the reception unit 120 may be collectively referred to as a communication unit.

The transmission unit 110 includes a function of generating a signal to be transmitted to the terminal 20 side and transmitting the signal by radio. The reception unit 120 includes a function of receiving various signals transmitted from the terminal 20 and acquiring, for example, information of a higher layer from the received signal. The transmission unit 110 has a function of transmitting NR-PSS, NR-SSS, NR-PBCH, DL/UL control signal, DCI by PDCCH, data by PDSCH, and the like to the terminal 20.

The configuration unit 130 stores configuration information set in advance and various kinds of configuration information to be transmitted to the terminal 20 in a storage device included in the configuration unit 130, and reads the configuration information from the storage device as necessary.

The control unit 140 performs scheduling of DL reception or UL transmission of the terminal 20 via the transmission unit 110. The control unit 140 also includes a function of performing LBT. The functional unit related to signal transmission in the control unit 140 may be included in the transmission unit 110, and the functional unit related to signal reception in the control unit 140 may be included in the reception unit 120. The transmission unit 110 may be referred to as a transmitter, and the reception unit 120 may be referred to as a receiver.

### <Terminal 20>

FIG. 19 is a diagram illustrating an example of a functional configuration of the terminal 20. As illustrated in FIG. 19, the terminal 20 includes a transmission unit 210, a reception unit 220, a configuration unit 230, and a control unit 240. The functional configuration shown in FIG. 19 is merely an example. The functional sections and the names of the functional units may be any as long as the operations according to the embodiment of the present invention can be executed. The transmission unit 210 and the reception unit 220 may be collectively referred to as a communication unit.

The transmission unit 210 creates a transmission signal from the transmission data and transmits the transmission signal by radio. The reception unit 220 receives various signals by radio and acquires a signal of a higher layer from the received signal of the physical layer. Also, the reception unit 220 has a function of receiving NR-PSS, NR-SSS, NR-PBCH, DL/UL/SL control signal, DCI by PDCCH, data by PDSCH and so on, transmitted from the base station 10. For example, the transmission unit 210 may transmit a physical sidelink control channel (PSCCH), a physical sidelink shared channel (PSSCH), a physical sidelink discovery channel (PSDCH), a physical sidelink broadcast channel (PSBCH), or the like to other terminals 20 as D2D communication, and the reception unit 120 may receive the PSCCH, the PSSCH, the PSDCH, the PSBCH, or the like from other terminals 20.

The configuration unit 230 stores various types of configuration information received from the base station 10 or another terminal by the reception unit 220 in a storage device included in the configuration unit 230, and reads the configuration information from the storage device as necessary. The configuration unit 230 also stores configuration information set in advance.

The control unit 240 controls the terminal 20. The functional unit related to signal transmission in the control unit 240 may be included in the transmission unit 210, and the functional unit related to signal reception in the control unit 240 may be included in the reception unit 220. The transmission unit 210 may be referred to as a transmitter, and the reception unit 220 may be referred to as a receiver.

### <Supplementary Note>

The present embodiment provides at least a terminal, a base station, and a communication method described in items 1 to 5 below.

### [Item 1]

A terminal including:
a reception unit configured to receive control information for performing scheduling for a plurality of cells by a downlink channel in a specific cell; and
a control unit configured to assume not performing communication by the scheduling in at least one cell of the plurality of cells during a period from an end of reception of the downlink channel until elapse of a communication preparation time.

### [Item 2]

The terminal as described in item 1, wherein the communication preparation time is
a predefined value; or
a value notified from a base station by higher layer signaling or the control information.

### [Item 3]

The terminal as described in item 1, wherein the communication preparation time is
a value associated with a subcarrier spacing of the specific cell;
a value associated with a subcarrier spacing of a cell, among the plurality of cells, other than the specific cell; or
a value associated with a difference between the subcarrier spacing of the specific cell and the subcarrier spacing of a cell, among the plurality of cells, other than the specific cell.

### [Item 4]

A base station including:
a control unit configured to generate control information for performing scheduling for a plurality of cells such that communication by the scheduling is not performed by a terminal in at least one cell of the plurality of cells during a period from an end of reception of a downlink channel by the terminal until elapse of a communication preparation time; and
a transmission unit configured to transmit the control information by the downlink channel to the terminal.

### [Item 5]

A communication method executed by a terminal, the communication method including:
receiving control information for performing scheduling for a plurality of cells by a downlink channel in a specific cell; and
assuming not performing communication by the scheduling in at least one cell of the plurality of cells during a period from an end of reception of the downlink channel until elapse of a communication preparation time.

Any of the items 1 to 5 provides a technique that enables a terminal and a base station to operate appropriately when scheduling is performed for a plurality of cells. According to item 2, a communication preparation time can be defined or configured. According to item 3, the communication preparation time can be determined based on a clear criterion.

### (Hardware Configuration)

The block diagrams (FIGs. 18 and 19) used in the description of the embodiment described above illustrate the block of functional units. Such functional blocks (configuration parts) are attained by at least one arbitrary combination of hardware and software. In addition, an attainment method of each of the function blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions to transmit is referred to as the transmitting unit or the transmitter. As described above, the attainment method thereof is not particularly limited.

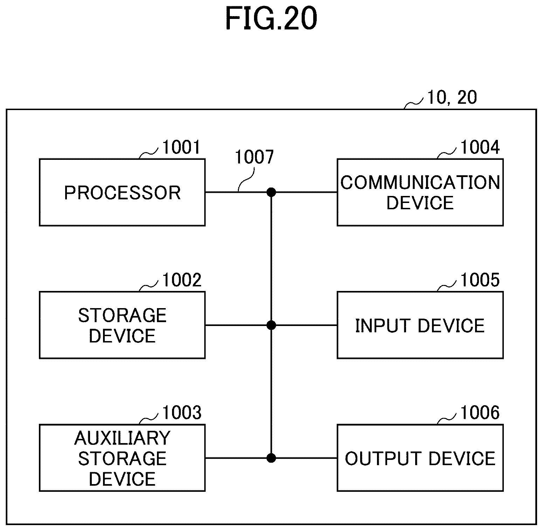

For example, the base station 10, the terminal 20 and the like in one embodiment of this disclosure may function as a computer for performing the processing of a radio communication method of this disclosure. FIG. 20 is a diagram illustrating an example of a hardware configuration of the base station 10 and the terminal 20 according to one embodiment of this disclosure. The base station 10 and the terminal 20 described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the base station 10 and the terminal 20 may be configured to include one or a plurality of apparatuses illustrated in the drawings, or may be configured not to include a part of the apparatuses.

Each function of the base station 10 and the terminal 20 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processing. A program for allowing a computer to execute at least a part of the operation described in the embodiment described above is used as the program. The control unit 140 of the base station 10 shown in FIG. 18 may be attained by a control program that is stored in the storage device 1002 and is operated by the processor 1001. Also, for example, the control unit 240 of the terminal 20 shown in FIG. 19 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disc), a smart card, a flash memory (for example, a card, a stick, a key drive), a floppy (Registered Trademark) disk, a magnetic strip, and the like. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wire network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the base station 10 and the terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

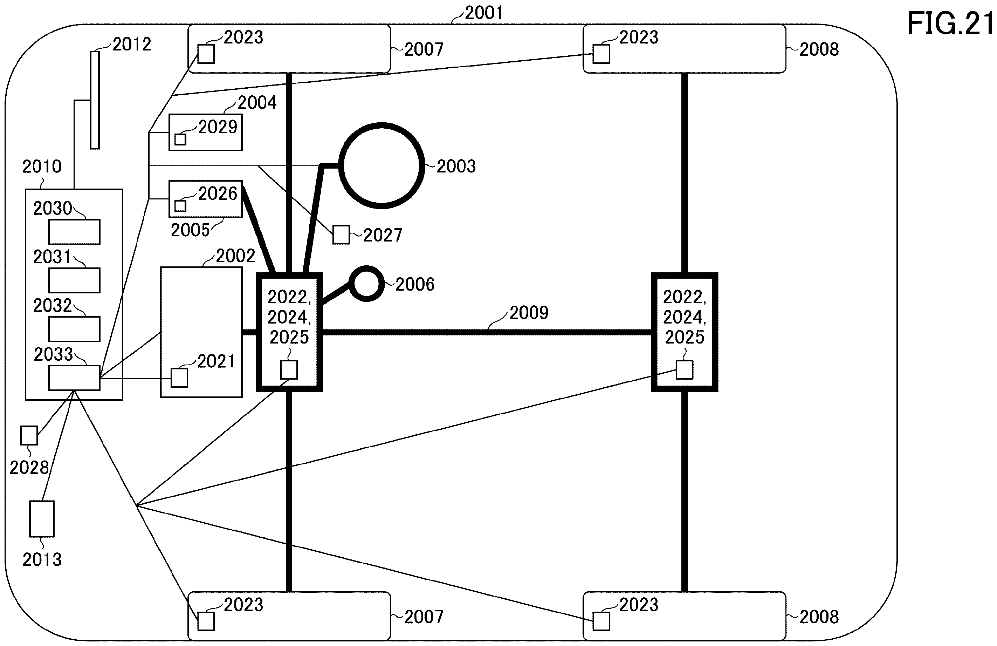

The terminal 20 or the base station 10 may be provided in a vehicle. FIG. 21 shows a configuration example of a vehicle 2001 according to the present embodiment. As shown in FIG. 21, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021-2029, an information service unit 2012, and a communication module 2013. Each aspect/embodiment described in the present disclosure may be applied to a communication apparatus mounted on the vehicle 2001, and may be applied to, for example, the communication module 2013. The functions of the terminal 20 may be incorporated in the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via the communication port 2033, to and from the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM, RAM) 2032 in the electronic control unit 2010, and sensors 2021-2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheels 2007, the rear wheels 2008, the axle 2009, the sensors 2021-2029, etc., mounted in the vehicle 2001.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction) . A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station 10 and the terminal 20 have been described by using a functional block diagram, but such an apparatus may be attained by hardware, software, or a combination thereof. Each of software that is operated by a processor of the base station 10 according to the embodiment of the invention and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiments described in this disclosure may be applied to a system using long term evolution (LTE), LTE-advanced (LTE-A), SUPER 3G, IMT-advanced, a 4th generation mobile communication system (4G), a 5th generation mobile communication system (5G), future radio access (FRA), new radio (NR), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded on the basis thereof. In addition, a combination of a plurality of systems (for example, a combination of at least one of LTE and LTE-A and 5G, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station 10 may be performed by an upper node, in accordance with a case. In a network provided with one or a plurality of network nodes including the base station 10, it is obvious that various operations that are performed in order for communication with respect to the terminal 20 can be performed by at least one of the base station 10 and network nodes other than the base station 10 (for example, MME, S-GW, or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value) .

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), at least one of the wire technology and the radio technology is included in the definition of the transmission medium.

The information, the signal, and the like described in this disclosure may be represented by using any of various different technologies. For example, the data, the command, the information, the signal, the bit, the symbol, the chip, and the like that can be referred to through the entire description described above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling) . In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding piece of information. For example, a radio resource may be indicated by an index.

The names used in the parameters described above are not a limited name in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, by a person skilled in the art.

At least one of the base station and the mobile station may be referred to as a transmitting apparatus, a receiving apparatus, a communication apparatus, and the like. Note that, at least one of the base station and the mobile station may be a device that is mounted on a mobile object, the mobile object itself, or the like. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station in this disclosure may be replaced with the terminal. For example, each aspect/embodiment of this disclosure may be applied to a configuration in which communication between the base station and the user terminal is replaced with communication in a plurality of terminals 20 (for example, may be referred to as device-to-device (D2D), vehicle-to-everything (V2X), and the like). In this case, the function of the base station 10 described above may be provided in the terminal 20. In addition, the words "uplink", "downlink", and the like may be replaced with words corresponding to the communication between the terminals (for example, "side"). For example, an uplink channel, a downlink channel, and the like may be replaced with a side channel.

Similarly, the user terminal in this disclosure may be replaced with the base station. In this case, the function of the user terminal described above may be provided in the base station.

The terms "determining" used in this disclosure may involve diverse operations. "Determining", for example, may include deeming judging, calculating, computing, processing, deriving, investigating, looking up (search, inquiry) (for example, looking up in a table, a database, or another data structure), and ascertaining, as "determining". In addition, "determining" may include deeming receiving (for example, receiving information), transmitting (for example, transmitting information), input, output, and accessing (for example, accessing data in a memory), as "determining". In addition, "determining" may include deeming resolving, selecting, choosing, establishing, comparing, and the like as "determining". That is, "determining" may include deeming an operation as "determining". In addition, "determining" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some non-limiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot based on a standard to be applied.

The description "based on" that is used in this disclosure does not indicate only "based on only", unless otherwise specified. In other words, the description "based on" indicates both "based on only" and "based on at least".

Any reference to elements using the designations "first," "second," and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time units greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time units at the time of transmitting a signal. Other names respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, a unit representing TTI may be referred to as a slot, a mini slot, and the like, but not a subframe. Also, one slot may be referred to as a unit time. The unit time may differ for each cell according to the numerology.

Here, TTI, for example, indicates a minimum time unit of scheduling in radio communication. For example, in an LTE system, the base station performs scheduling for allocating a radio resource (a frequency bandwidth, transmission power, and the like that can be used in each of the terminals 20) in TTI units, with respect to each of the terminals 20. Note that, the definition of TTI is not limited thereto.

TTI may be a transmission time unit of a data packet (a transport block), a code block, a codeword, and the like that are subjected to channel coding, or may be processing unit of scheduling, link adaptation, and the like. Note that, when TTI is applied, a time section (for example, the number of symbols) in which the transport block, the code block, the codeword, and the like are actually mapped may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a normal TTI (TTI in LTE Rel.8-12), a normal TTI, a long TTI, a normal subframe, a normal subframe, a long subframe, a slot, and the like. TTI shorter than the normal TTI may be referred to as a shortened TTI, a short TTI, a partial TTI (or a fractional TTI), a shortened subframe, a short subframe, a mini slot, a subslot, a slot, and the like.

Note that, the long TTI (for example, the normal TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is a resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined based on the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a sub-carrier group (SCG), a resource element group (REG), a PRB pair, an RB pair, and the like.

In addition, the resource block may be configured of one or a plurality of resource elements (RE) . For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP) . In UE, one or a plurality of BWPs may be configured within one carrier.

At least one of the configured BWPs may be active, and it need not be assumed that the UE transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as a, an, and the are added by translation, this disclosure may include a case where nouns following the articles are plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and modified without departing from the spirit and scope of this disclosure defined by the description of the claims. Therefore, the description in this disclosure is for illustrative purposes and does not have any limiting meaning with respect to this disclosure.

### Description of Symbols

10 base station
110 transmission unit
120 reception unit
130 configuration unit
140 control unit
20 terminal
210 transmission unit
220 reception unit
230 configuration unit
240 control unit
1001 processor
1002 storage device
1003 auxiliary storage device
1004 communication device
1005 input device
1006 output device
2001 vehicle
2002 drive unit
2003 steering unit
2004 accelerator pedal
2005 brake pedal
2006 shift lever
2007 front wheels
2008 rear wheels
2009 axle
2010 electronic control unit
2012 information service unit
2013 communication module
2021 current sensor
2022 revolution sensor
2023 pneumatic sensor
2024 vehicle speed sensor
2025 acceleration sensor
2026 brake pedal sensor
2027 shift lever sensor
2028 object detection sensor
2029 accelerator pedal sensor
2030 driving support system unit
2031 microprocessor
2032 memory (ROM, RAM)
2033 communication port (IO port)

## Claims

1. A terminal comprising:
a reception unit configured to receive control information for performing scheduling for a plurality of cells by a downlink channel in a specific cell; and
a control unit configured to assume not performing communication by the scheduling in at least one cell of the plurality of cells during a period from an end of reception of the downlink channel until elapse of a communication preparation time.

2. The terminal as claimed in claim 1, wherein the communication preparation time is
a predefined value; or
a value notified from a base station by higher layer signaling or the control information.

3. The terminal as claimed in claim 1, wherein the communication preparation time is
a value associated with a subcarrier spacing of the specific cell;
a value associated with a subcarrier spacing of a cell, among the plurality of cells, other than the specific cell; or
a value associated with a difference between the subcarrier spacing of the specific cell and the subcarrier spacing of the cell, among the plurality of cells, other than the specific cell.

4. A base station comprising:
a control unit configured to generate control information for performing scheduling for a plurality of cells such that communication by the scheduling is not performed by a terminal in at least one cell of the plurality of cells during a period from an end of reception of a downlink channel by the terminal until elapse of a communication preparation time; and
a transmission unit configured to transmit the control information by the downlink channel to the terminal.

5. A communication method executed by a terminal, the communication method comprising:
receiving control information for performing scheduling for a plurality of cells by a downlink channel in a specific cell; and
assuming not performing communication by the scheduling in at least one cell of the plurality of cells during a period from an end of reception of the downlink channel until elapse of a communication preparation time.
